# EUROPÄISCHE PATENTSCHRIFT

(11) **EP 2 397 321 B1**
(45) Veröffentlichungstag und Bekanntmachung des Hinweises auf die Patenterteilung: **24.04.2013**
(21) Anmeldenummer: 10006281.9
(22) Anmeldetag: 17.06.2010
(51) Int. Cl.: B32B 7/12, B32B 37/12, B32B 38/16, B05D 1/02, B05D 5/10

(54) **Beschichtungsverfahren für eine Laminier- oder Kaschiermaschine**
Coating process for a laminating or lining machine
Procédé de revêtement pour une machine de laminage ou une contre-colleuse

(43) Veröffentlichungstag der Anmeldung: 21.12.2011
(73) Patentinhaber: Steinemann Technology AG, 9015 St. Gallen (CH)
(72) Erfinder: Krebs, Sebastian, 9000 St. Gallen (CH); Bologna, Roberto, 9200 Gossau (CH); Hari, Michael, 9212 Rossrüti (CH); Scheiwiler, Marcel, 9320 Arbon (CH); Walther, Thomas, 9000 St. Gallen (CH)
(74) Vertreter: Weiss, Peter

(56) Entgegenhaltungen:
- WO-A1-97/04036
- DE-A1-102007 037 205

## Beschreibung

Die Erfindung bezieht sich auf ein Verfahren nach dem Begriff des Anspruchs 1.

Aus dem Stand der Technik wird auf die DE 10 2007 037 205 A1 und die WO 97/04036, welche beide eine Erwärmung eines Klebers zur Beschleunigung der Klebereaktion offenbaren.

Das Laminat wird erzeugt, indem mindestens zwei Lagen, von der mindestens eine Lage einen Klebstoffauftrag trägt, in dem Kaschlerspalt, gebildet von der Kaschierwalze und einer Gegendruckwalze bzw. von Kaschierbändern und entsprechenden Gegenkaschierbändern oder -walzen, unter Druck miteinander verbunden werden. Die Begriffe kaschieren bzw. laminieren bzw. Kaschierlage bzw. Laminatlage werden im folgendem als Synonyme verwendet. Laminat bezeichnet das Endprodukt aus mindestens zwei Lagen, die mittels eines Klebstoffes verbunden sind. Kaschierlage oder Laminatlage bezeichnet eine Teillage des Endlaminats.

Nach dem jetzigen Stand der Technik wird der Klebstoff in den meisten Fällen mittels eines Walzenauftragswerk auf eine oder mehrere Substratlagen vor dem Zusammenfügen des Laminats aufgebracht. Die Dosierung erfolgt dabei durch die die Beistellung zweier oder mehrerer Walzen zueinander mit einer Rasterwalze, die Näpfchen aufweist und an der Oberfläche abgerakelt wird. Der Auftrag des Klebstoffes auf die Substratlage bzw. Substratlagen erfolgt bei allen Walzenwerken kontaktierend, d.h. die Auftragswalze des Walzenwerkes steht im Kontakt mit der Substratlage. In den häufigsten Anwendungen werden wasserbasierte Dispersionskleber eingesetzt, da diese kostengünstig und umweltfreundlich sind. Für den Transport wird der Klebstoff mit relativ hohen Anteilen von Wasser verdünnt, so dass der Festkörperanteil oftmals nur 40-50% beträgt. Der Rest bildet das Wasser plus einige Additive. Ein proportional zur eingebrachten Menge des Wasseranteils hoher Energieaufwand ist nach dem Übertragen auf die Substratlage notwendig, damit der aufgetragene Klebstoff seine Klebrigkeit erhält indem eine grosse Menge an Wasser und anderen Lösemittelbestandteilen dem Klebstofffilm entzogen wird. Dies geschieht energetisch sehr aufwendig zum Beispiel durch Trommeltrockner und beheizte Kaschier- und/oder Trockentrommelwalzen. Neben dem benötigten hohen Energieaufwand sind die bisherigen Lösungen auch konstruktiv sehr aufwendig und kostspielig.

Ansätze das Auftragssystem durch Düsentechnik zu verbessern und auch zu vereinfachen sind in vielen Anwendungsgebieten der Laminiertechnologie bekannt.

Der Auftrag von Klebstoff auf Lagen eines Laminats mit Düsen ist unter anderem in der Gebrauchsmusterschrift DE 298 24 883 U1 offenbart. Der Klebstoff wird mittels einer Breitschlitzdüse auf ein erstes Substrat des Laminats aufgebracht. Ein ähnliches Verfahren und eine dazugehörige Vorrichtung wird in der EP 0 951 992 B1 beschrieben. In der besagten Patentschrift heisst es: "Ganz besonders eignet sich die erfindungsgemässe Kaschiervorrichtung für Sichtkaschierungen mit einem 100% Klebstoffsystem, wobei zum Beginn des Einlaufspaltes zwischen der Gegendruckwalze und der Releasewalze auf die über die Gegendruckwalze geführte Kaschierfolie mittels einer geheizten Breitschlitzdüse ein thermoplastischer Klebstoff aufgebracht wird." [EP 0 951 992 B1, Seite 2, 2. Spalte, Abschnitt 0008] Der Klebstofffilm wird dabei ohne Kontakt zu dem Substrat aufgetragen. Nachteilig an den besagten Verfahren ist, dass ein gegenüber Dispersionsklebern (auf Wasserbasis) sehr teurer Klebstoff eingesetzt wird. Die breite Anwendung der Dispersionsklebstoffe zeigt, dass diese gegenüber Hotmelt-Klebstoffen trotz des hohen Bedarfs an Trocknungsenergie deutliche Kostenvorteile haben. Neben den deutlichen Kostennachteilen haben thermoplastische Klebstoffe den Nachteil, dass das Laminat sich unter Hitzeeinwirkung in die einzelnen Lagen lösen kann. Dies ist unter anderem der Fall, wenn das Druckprodukt, z.B. als laminiertes Plakat, der Sonneneinstrahlung ausgesetzt wird.

Allgemein wird das Auftragen eines Klebstoffes zum Verbinden von Folien mittels Düsen in der EP 1 108 539 A1 behandelt. Dabei wird der Klebstoff auf eine Glattwalze aufgetragen und von dieser auf das Substrat. Ziel der Erfindung ist die Verbesserung und Vereinfachung der Auftragssystems durch den Wegfall der Rasterwalze mit ihren vielen Einflussparametern auf die Beschichtungsqualität. Die in der EP 1 108 539 A1 1 gefundene Lösung weist jedoch den Nachteil auf, dass der Klebstoff, sofern er nicht vollständig auf das Substrat übertragen wird, sich langsam auf der Auftragswalze aufbauen wird, sofern er nicht bei jeder Umdrehung aufwendig von der Walze abgerakelt oder die Klebstoffreste in einer anderen geeigneten Art und Weise entfernt werden. Auch bietet die EP 1 108 539 A1 keinen Ansatz zur Steigerung der Prozesseffizienz, da sich das Verbesserungspotential ausschliesslich auf das Auftragssystem beschränkt. Das Auftragen von wasserbasierten Dispersionsklebstoff mit Düsen ist erstmals in der WO 2006/138448 A2 ausführlich beschrieben. Die Patentanmeldung beschäftigt sich unter anderem mit dem Auftrag von Dispersionsklebstoff in Schaumform. Durch die Schaumbildung soll das Eindringen des Klebstoffs in feine Poren eines saugfähigen Substrates vermindert werden und somit die Kaschierung solcher Materialien mit einer geringeren Auftragsmenge als üblich ermöglichen. Repräsentative Klebstoffe können gemäss der WO 2006/138448 A2 wasserbasierende Klebstoffe sein, die mindestens ein oder mehrere monomere, oligomere oder polymere Komponenten enthalten, die in ein wässriges Medium durch Dispersion, Suspension, Emulsion, Lösung oder in ähnlicher Form eingebracht wurden. Die WO 2006/138448 A2 bietet aber nur eine Verbesserung des Auftragssystems und durch verringerte Auftragsschichtdicken geringe Ansätze zu Energieeinsparung. Eine geschäumte Masse schliesst sich aber für eine Sichtkaschierung aus, da der Kleberauftrag im Wesentlichen die Transparenz bestimmt. Kleine Lufteinschlüsse lassen zum Beispiel bei einer Glanzkaschierung auf einem Druckbild sofort als störendes Muster erkennen. Hinweise auf ein verbessertes Trocknungsverhalten durch Vorheizen eines Sprühmediums weist die Patentschrift nicht auf.

Aus der Verfahrenstechnik ist die Sprühtrockentechnik bestens bekannt. Hierbei werden z.B. Kunststoffdispersionen durch Sprühen in einen Trockenturm zu Kunststoffpulver getrocknet. Sprühtürme werden üblicherweise im Gleichstrom betrieben und zwar vorzugsweise von oben nach unten. In diesem Fall werden die Heissluft und die Dispersion am Kopf des Sprühturms eingeführt. Die Lufttemperatur nimmt infolge der zur Verdunstung des Wassers aufgewandten Energie von oben nach unten ab. Die Dispersion wird am Kopf des Sprühturms zu feinen Tropfen zerstäubt; dazu dienen Sprühdüsen. Die entstandenen Pulverteilchen sammeln sich am Fusse des Sprühturmes bzw. im so genannten Konus oder werden durch Einleiten in einen Zyklonabscheider vom Luftstrom getrennt. Eine solche gattungsbildende Vorrichtung zum Trocknen von Kunststoffdispersionen ist unter anderem in der DE 37 02 997 A1. Obwohl solche Vorrichtungen bestens bekannt sind, wurde das Funktionsprinzip für die Vortrocknung von Dispersionsklebern zum Verbinden von Lagen bisher nicht angewandt. Ausserdem ist das Ziel einer solchen Sprühtrocknungsanlage die vollständige Trocknung der Dispersionslösung zu einem Pulver, während in der Klebstofftechnologie der Dispersionsklebstoff nur insofern getrocknet werden müsste, dass er eine ausreichende Klebrigkeit zum Verbinden der Lagen erhält. Weiter Erwähnung der Sprühtrocknung von wässrigen Systemen sind unter anderem in der DE 25 12 238 C, der US 3,803,111 und in der EP 0 332 067 B1 zu finden. Die vorab zur DE 37 02 997 A1 angeführte Argumentation gilt hier äquivalent.

Alle bekannten Beschichtungseinrichtungen mit Düsen lassen nur ein begrenztes Einstellen der Applikation über die Substratbreite zu. Um ein gleichmässiges Sprüh- oder Beschichtungsbild zu erzeugen kann ein so genanntes Overspray über die Kante nie vollständig vermieden werden. Dies kann aber zur Verschmutzung von Maschinenteilen und zu unerwünschten Rückseitenbeschichtungen führen. Die DE 10 2004 040 945 B4 schlägt daher vor, dass mindestens ein Randbereich durch ein beabstandet vom Substrat angeordnete Abdeckeinrichtung beschichtungsfrei gehalten wird. In dem besonderen Fall der DE 10 2004 040 945 B4 handelt sich dabei um eine Abdeckeinrichtung, die quer zur Transportrichtung der Leiterplatten beweglich ist und das auf Ihr während des Beschichtungsprozesses aufgetragene Beschichtungsmaterial unter Beibehaltung der Randabdeckung aus der Beschichtungszone transportiert, mittels einer Abstreifeinrichtung von dieser entfernt und einem Vorratsbehälter zugeführt wird. Ferner weist die DE 10 2004 040 945 B4 ausführlich auf den Stand der Technik durch statische Begrenzungselemente hin. Diese bekannte Methode zur Seitenkantenabdeckung bezieht sich in der DE 10 2004 040 945 B4 ausschliesslich auf die Leiterplattenfertigung. Bezüge zu Anwendungen in der Druckindustrie und speziell im Bereich des Kaschierens / Laminierens sind nicht zu erkennen und damit als neuartig zu betrachten. Ferner konzentriert sich die Anmeldung und der dort aufgeführte Stand der Technik auf Giessvorgänge mit frei fallendem Giessvorhang, der mit einem entsprechenden Giesskopf appliziert werden. Anwendungen mit Sprühtechnik werden in den angeführten Patentschriften nicht beschrieben.

Neben den aus der EP 0 951 992 bekannten Breitschlitzdüse können auch mehrere Spraydüsen nebeneinander und gegebenenfalls hintereinander angeordnet werden, so dass sich ihre Sprühkegel überlappen. Hierdurch lässt sich ein sehr gleichmässiges Sprühbild erzeugen. Heutzutage lässt sich mit wässrigen Medien ein gleichmässiger Auftrag mit einer Schichtdickenabweichung über die Beschichtungsbreite von 1-3% erzielen. Damit liegt die Beschichtungsgüte in einem Qualitätsniveau klassischer Walzenbeschichtungssysteme.

Geeignete Sprühdüsen bzw. Beschichtungs- oder Sprühvorrichtung 1 für eine solche Anwendung sind Einstoff - Druckdüsen oder Zweistoff- oder Mehrfachstoffdüsen. Bei den Einstoff - Druckdüsen ist der Energielieferant die zerstäubende Flüssigkeit selbst. Die Flüssigkeit wird unter Druck der Einstoff-Druckdüse zugeführt. An der Düsenmündung wird je nach Düsenbauart ein Flüssigkeitsstrahl oder eine Flüssigkeitslamelle erzeugt. Die Spraytropfenbildung setzt in der Regel erst in einer gewissen Entfernung von der Düsenmündung ein. Zweistoff - Düsen arbeiten nach dem Prinzip der Strahlpumpe. Energielieferant ist ein mit hoher Geschwindigkeit strömendes Gas oder Dampf. Die zu zerstäubende Flüssigkeit kann nahezu drucklos geführt werden. Zweistoffdüsen unterscheidet man in Düsen mit innerer- und äusserer Mischung. Bei der inneren Mischung werden das Treibgas und die Flüssigkeit innerhalb des Düsenkopfs gemischt, während bei der äusseren Mischung die Mischung erst ausserhalb des Düsenmundes erfolgt.

Ziel und Aufgabe der Erfindung ist daher ein Auftragssystem für Klebstoffe in Laminier-oder Kaschieranlagen zu schaffen, dass die Verwendung eines kostengünstigen wasserbasierten Laminier- bzw. Kaschierklebers (Dispersionsklebers) erlaubt, wobei der energetische Aufwand für die Trocknung und der maschinenbauliche Aufwand gleichzeitig in einem erheblichen Mass reduziert wird.

Die erfindungsgemässe Lösung wird gebildet gemäß dem Anspruch 1.

Überraschend wurde in einem Versuch festgestellt, dass sich Dispersionskleber in einem geschlossenen Behältnis auch über einen längeren Zeitraum über 100° Celsius erwärmen lassen, ohne dass, wie ursprünglich erwartet, Zersetzungsprozesse einsetzen.

Das Experiment wurde mit einem Kaschierkleber der Firma Weilburger Graphics (Handelsname SENOBOND-WL-Folienkaschierkleber 375202) ausgeführt. Es handelt sich um einen Spezialklebstoff zum Kaschieren von vorbehandelten OPP - Folien auf Druckerzeugnisse der graphischen Industrie.

Der Festkörperanteil des Kaschierklebers betrug 50±2%, der Rest bestand im Wesentlichen aus wässrigem Lösemittel. Der Kaschierkleber wurde für 3h bei 130° Celsius weitgehend luftdicht abgeschlossen gelagert. Eine anschliessende Handkaschierung im Labor war möglich. Dabei wurden die gleichen Niveau der Verbund / Schälfestigkeit erreicht. Auch die Prägefestigkeit war gegeben. Das Erhitzen führte unerwartet zu keinerlei technologischen Nachteilen. Durch die Wärmebelastung wurde die Vernetzung des Kaschierklebers nicht negativ beeinflusst. Die Viskosität des Klebers sank bei 80° Celsius auf 12s (Auslaufzeit gemessen mit einem DIN 4mm Auslaufbecher), gegenüber 15s bei 20° Celsius. Zusammenfassend kann überraschenderweise gesagt werden, dass der handelsübliche Kaschierkleber in einem geschlossenen und luftdichten System kurzzeitig auf höhere Temperaturen erwärmt werden kann, ohne dass gleich ein Zersetzungsprozess stattfindet.

Ferner konnte in dem obigen Experiment beobachtet werden, dass nach dem Ausstreichen des zuvor erhitzten Kaschierklebers auf die Laminatlage sofort eine Hautbildung stattfand. Die Klebrigkeit stieg in einem sehr kurzen Zeitraum sehr schnell an. Dieser Effekt führte zu der erfindungsgemässen Idee, den Kaschierkleber mit einem erhitzten Treibgas zu versprühen. Die Tropfenbildung während des Sprühvorgangs hat den Vorteil, dass die Oberfläche an der die Verdunstung von Statten gehen kann extrem vergrössert wird. Durch die Erwärmung und die vergrösserte Oberfläche findet die erforderliche Verdunstung sehr schnell statt. Dass solche Effekte möglich sind zeigen die Anwendungen von Sprühtrocknungen. Jedoch fand dies bisher keinerlei Anwendung bei der Applikation von wässrigen Kaschierklebern zum Zwecke der Verbindung von Laminatlagen zu einem Laminat.

Alternativ kann der erhitzte Dispersionsklebstofffilm auch mit einer Breitschlitzdüse auf die Laminatlage aufgebracht werden.

Die Erwärmung des Kaschierklebers kann geschehen, in dem er aus einem beheizten Vorratsbehälter entnommen und über eine Sprühdüse 1 versprüht wird. Der Vorratsbehälter und der Förderweg bis zur Sprühöffnung der Düse sollten möglichst luftdicht abgeschlossen sein, um ein vorzeitiges Anziehen des Kaschierklebers zu vermeiden. Der Kaschierkleber kann auch erhitzt werden, indem der Düsenkopf 1 selber beheizt ist und / oder der Kaschierkleber in den Förderschläuchen in bekannter Weise durch Schlauchheizungen erhitzt wird. Die einzelnen Massnahmen der Erhitzung des Kaschierklebers lassen sich dabei in beliebiger Form miteinander kombinieren.

Idealer Weise setzt man für das Versprühen des Kaschierklebers eine Zweistoffdüse 1 ein, bei der ein strömendes Gas als Energielieferant dient. Dieses Gas kann zum Beispiel über Heizpatronen erhitzt werden. Für eine Trocknung ideale Temperaturen von einer Gastemperatur über 120° Celsius lassen sich, wie der Stand der Technik im klassischen Trocknerbau zeigt, ohne grossen apparativen Aufwand verwirklichen. Bei einer aussenmischenden Zweistoff-Sprühdüse 1 kommen Gas und Kaschierkleber im Wesentlichen erst ausserhalb des Düsenmundes 2 in Kontakt, so dass ein vorzeitiges Anziehen und Antrocknen des Kaschierklebers innerhalb der Düse 1 effektiv vermieden wird. Selbstverständlich lässt sich die Massnahme erhitzter Kaschierklebstoff mit der Massnahme erhitztes Treibgas kombinieren. Auch ein Versprühen eines erhitzten Kaschierklebers mit einem nicht speziell erhitzten Treibgas ist im Sinne der Erfindung denkbar und erfüllt den erfindungsgemäss gewünschten Effekt den Kaschierkleberauftrag mit der Trocknung desselben zu verbinden.

Theoretisch, aber mit deutlich geringeren Effizienzwerten, könnten die Erwärmung des Sprühstrahls und die Erwärmung des Sprühbildes auf der Laminatlage 4 auch durch eine indirekte Beheizung erfolgen. Diese könnte zum Beispiel geschehen, indem die Sprühvorrichtung 1 in einer zu mindestens teilweise geschlossenen Behausung 13 untergebracht ist und in die in der Behausung 13 befindliche Umgebungsluft erhitzt wird. Dies könnte zum Beispiel mit Infrarotstrahler 10, eingeleiteter Heissluft 10, Thermoluftdüsen 10, elektrischen Heizaggregaten 10 und anderen geeigneten Erwärmungsmethoden erfolgen. Dies würde im Wesentlichen dem Verfahren der klassischen Sprühtrocknung entsprechen, wobei keine absolute Trockenheit, sondern nur ein gewisser Entzug an Feuchte des Sprühmediums erforderlich wäre.

Bei einer strahlendichten Kapselung des Sprühbereichs könnte der Sprühstrahl und gegebenenfalls auch durch eine energiereiche Strahlung, vorzugsweise eine Strahlung, die direkt in den Wasseranteil des Kaschierklebers, beaufschlagt. Denkbar wäre hier Mikrowellenstrahlung unterschiedlichster Frequenzbereiche.

Bei Einsatz einer Breitschlitzdüse kann der Beschichtungsvorgang erfolgen, indem der Klebstoff ohne Versprühen während der Produktion als ein kontinuierlicher Film aufgebracht wird. Die Methoden zur Erhitzung der Düse zugeführten Dispersionsklebstofffilms können äquivalent zu den Sprühverfahren gewählt werden.

Dieses erfindungsgemässe Verfahren ist durch eine hohe Energieeffizienz gekennzeichnet, da aufgrund der hohen Oberfläche das Lösemittel Wasser während des Sprühvorgangs ideal aus dem Sprühmedium Kaschierkleber austreten kann. Im Gegensatz dazu wird bei der geschlossenen Auftragstechnik mit Walzen ein geschlossener Kaschierkleberfilm auf die Laminatlage 4 aufgetragen. Diese Schicht wird in der Regel mit Heissluft und / oder Infrarot auf der Laminatlage 4 soweit getrocknet, dass der Kaschierkleber soweit seine Klebrigkeit erzielt, die für ein Verbinden der Lagen erforderlich ist. Unterstützt wird die Trocknung in den meisten Kaschiermaschinen ferner, indem die Laminatlage in dem Trocknerbereich über einen aufwendig beheizten Zylinder geführt wird. Die eingebrachte Energie muss schon aus rein physikalischen Gründen deutlich höher sein als bei der erfindungsgemäss gefundenen Lösung. Die geschlossene Kaschierkleberschicht ist bei dem konventionellen Walzenauftragsverfahren viel dicker und die eingebrachte Energie muss die Schicht komplett durchdringen. Das erfindungsgemässe Verfahren zeichnet sich daher durch eine sehr hohe Energieeffizienz aus.

Àhnliche vorteilhafte Effekte lassen sich auch mit einer Beschichtung mit einer Breitschlitzdüse erreichen. Die Masse wird dann im heissen Zustand auf die Folie beschichtet und das Wasser kann sehr schnell aus der Schicht verdunsten, da diese vollkommen durchwärmt ist.

Breitschlitzdüse und Sprühdüsen bzw. Sprühdüsengruppen lassen sich im Rahmen der Erfindung äquivalent einsetzen.

Auch maschinenbaulich bietet das erfindungsgemäss gefundene Verfahren deutliche Vorteile. Durch die Kombination der Vorgänge Kaschierkleberapplikation und Trocknung in einem Aggregat lassen sich wesentliche Trocknerteile und beheizte Zylinder einsparen. Neben einer deutlichen Verkleinerung solcher Anlagen lassen sich deutliche Herstellkostenvorteile erzielen. Die Herstellkosten liegen ca. 25% unter den Herstellkosten klassischer Kaschieranlagen. Ein deutlich wirtschaftlicherer Betrieb ist dadurch möglich.

Ein weiterer Vorteil ist die geringe Belastung des Kaschiermaterials. Aus Gründen der Ressourcen- und Materialeinsparung werden Laminate aus immer dünneren Laminatlagen zusammengesetzt. Diese sind jedoch in den meisten Fällen (Kunststoffmaterial) sehr empfindlich gegen übermässige Wärmeeinwirkung. Hierdurch werden die maximale einbringbare Wärmeenergie bei konventionellen Trockneranlagen und somit auch die Produktionsleistung limitiert. Bei dem erfindungsgemässen Verfahren des erhitzten Sprühens eines Dispersionsklebers kann dagegen die eingebrachte Trocknungsenergie erheblich höher gewählt werden ohne dass eine Beschädigung der zu besprühenden Laminatlage zu erwarten wäre. Die von einem wässrigen Lösemittel des Dispersionsklebers beim Verdampfen (bei konstanter Temperatur) aufgenommene Wärmeenergie wird als Verdampfungsenthalpie bezeichnet. Wird einer Flüssigkeit während des Verdampfens keine Wärmeenergie zugeführt, so wird die benötigte Wärmemenge der Umgebung entzogen, d.h. der Klebstoff kühlt während des Trockenvorgangs ab. Ein Teil der Evaporation findet daher schon während des Sprühens im Sprühkegel oder beim Austritt aus der Beschichtungsdüse statt, so dass der Klebstoff bei dem Auftreffen auf das Substrat eine geringere Temperatur aufweist als bei dem Austritt aus der Düsenmündung. Dadurch lassen sich auch wärmeempfindliche sehr dünne Folien effizient verarbeiten, da sie bei dem erfindungsgemässen Verfahren einer geringeren Wärmebelastung ausgesetzt sind.

In einer besonderen Erweiterung der Erfindung wird die Folie vor der Beschichtung durch Kühlwalzen oder andere geeignete Kühlvorrichtungen gekühlt. Dies ermöglicht eine Beschichtung mit einem besonders grossen Δt, ohne dass es zu einer Beschädigung der Folie kommt.

Neben der Vielzahl der Vorteile der erfindungsgemäss gefundenen Lösung hat Sprühen den Nachteil, dass feine Aerosole in der Umgebungsluft vagabundieren können. Deswegen sollte der Sprühvorgang in einer Umhausung 13 stattfinden, aus der Abluft 7 abgesaugt wird. Dies kann über Ventilatoren und / oder über Radialverdichter erfolgen. In den Absaugluftstrom 7 sind idealerweise Filteranlagen 8, z.B. Auswechselbare Filtermatten integriert, um die vagabundierenden Kleberaerosole aus dem Luftstrom auszufiltern. Durch die Filterung 8 in Kombination mit einer Absaugung 7 werden effektiv ein langsames Zusetzen der luftführenden Elemente mit Klebstoff und der damit verbundene hohe Reinigungsaufwand vermieden. Die Absaugung 7 ist auch technologisch wichtig, um eine Übersättigung der Luft mit Feuchtigkeit zu vermeiden, die eine deutliche Reduzierung der Trocknungsleistung bewirken würde.

Im Falle des erfindungsgemässen Beschichten mit einer Breitschlitzdüse findet keine oder nur in einem sehr geringem Umfang eine Aerosolbildung statt. Die Beschichtung kann deshalb in einer Umhausung stattfindet, zwingend ist dies aber nicht.

Auch wird bei dem Laminieren einzelner Lagen nicht immer eine Verklebung bis zum äussersten Rand der Laminatlage erwünscht. Bei einem Sprühen bis zum Rand der Laminatlage 4 ist es unvermeidlich, um eine weitgehend gleichmässige Beschichtungsstärke zu erzielen, über den Rand hinaus zu sprühen. Ein überschüssiges Sprühen auf unerwünschte Bereiche kann vermieden werden, indem eine statische Abdeckung über die Laminatlage 4 eingebracht wird, die die kritischen Bereiche abdeckt. Besser sind aber umlaufenden Bänder. Z.B. ein Stahl- oder Kunststoffband, das bei jeder Umdrehung abgerakelt oder in einer anderen geeigneten Form gereinigt wird. Die Bänder können unterhalb der Laminatlagenkante oder oberhalb dieser angeordnet sein. Die Bandgeschwindigkeit der Abdeckbänder kann, muss aber nicht zwangsweise dieselbe Geschwindigkeit wie die Laminatlage 4 aufweisen.

Bei Einsatz einer Breitschlitzdüse kann die Beschichtungsbreite in bekannterweise durch Einsätze oder andere geeignete Massnahmen automatisch oder manuell auf die Beschichtungsbreite eingestellt werden. Eine Beschichtung über den Rand kann, muss aber nicht erfolgen. Die Breite der Beschichtung kann so gewählt werden, dass knapp bis zu den äusseren seitlichen Rändern beschichtet wird und somit eine Klebstoffverschleppung in unerwünschte Bereiche vermieden wird.

Die erfindungsgemässe Lösung ermöglicht ein energieeffizientes und kostengünstiges Kleberbeschichtungs- und Trocknungsverfahren für wässrige Kaschierkleber und unterscheidet sich in technischer und wirtschaftlicher Hinsicht deutlich von dem bekannten Stand der Technik.

Bei bevorzugten Verfahren der Erfindung wird die mit Kaschierkleber zu besprühende Laminatlage und die Gegenlage aus Bogenmaterial gebildet, die in einem Kaschiervorgang unter Druck miteinander verbunden werden.

Ein weiterer Aspekt ist ein Druckprodukt, das unter Ausnutzung eines erfindungsgemäßen Verfahrens, insbesondere in einer der beschriebenen bevorzugten Varianten, hergestellt ist, wobei mindestens eine beteiligte Laminatlage ein in einem beliebigen Druckverfahren bedrucktes Druckprodukt darstellt.

Ein weiterer Aspekt ist eine Kaschier- / Laminiermaschine zur Durchführung eines erfindungsgemäßen Verfahrens, wobei die Kaschier- / Laminiermaschine mindestens eine Abrollung für das Rollenmaterial, einen Anleger für das Bogenmaterial und eine Kaschierstation, in der Regel gebildet durch mindestens eine Kaschierwalze und eine Gegenwalze, in der das Rollenmaterial mit dem Bogen oder dem geschuppten Bogenstrom unter Druck verbunden wird, aufweisen, wobei in dem Transportbereich des Rollenmaterials nach der Abrollung und vor dem Eintreten des Rollenmaterials in den Kaschierspalt das Rollenmaterial in dem erfindungsgemässen Verfahren mit einem Kaschierkleber durch eine Beschichtungseinrichtung beschichtet wird, und nach dem Austritt aus dem Kaschierspalt in Folge dann das Laminat durch eine Schneidvorrichtung oder eine andere geeignete Trennvorrichtung wieder in einzelne Bögen aufgetrennt wird,

Ein weiterer Aspekt ist eine Kaschier- / Laminiermaschine zur Durchführung eines erfindungsgemäßen Verfahrens, wobei die Kaschier- / Laminiermaschine mindestens zwei Abrollungen für die Rollenmaterialien und eine Kaschierstation, in der Regel gebildet aus der Kaschierwalze und einer Gegenwalze, in der das eine Rollenmaterial mit dem anderen Rollenmaterial unter Druck verbunden wird, aufweisen, wobei in dem Transportbereich mindestens eines Rollenmaterials nach der Abrollung und vor dem Eintreten des Rollenmaterials in den Kaschierspalt das Rollenmaterial in dem erfindungsgemässen Verfahren durch eine Beschichtungsvorrichtung mit einem Kaschierkleber beschichtet wird.

Ein weiterer Aspekt ist eine Kaschier- / Laminiermaschine zur Durchführung eines erfindungsgemäßen Verfahrens, wobei die Kaschiermaschine mindestens zwei Anlegereinrichtungen für Bogen aufweist, die mindestens zwei gleiche oder unterschiedliche Bögen von unterschiedlichen Stapeln entnehmen, diese Bogen dann der Kaschiermaschine zugeführt werden, wobei mit einer Sprühvorrichtung mindestens einer der zu verbindenden Bögen in dem erfindungsgemässen Verfahren mit einem Kaschierkleber besprüht wird, und die Bögen vor oder nach dem Beschichtungsvorgang durch eine Ausrichtvorrichtung zueinander ausgerichtet werden und anschliessend in einer Kaschiereinrichtung, in der Regel ein Walzenspalt zwischen zwei Walzen, unter Druck miteinander verbunden werden.

Bei bevorzugten Kaschier- / Laminiermaschinen sind in Transportrichtung des zu in dem erfindungsgemässen Verfahren zu beschichteten Laminats der Beschichtungseinrichtung vorgelagert mindestens eine Kühlvorrichtung, zum Beispiel eine Kühlwalze oder ein Kühlgebläse angeordnet, die die zu beschichtetende Laminatlage herunterkühlt, um eine höhere Klebstofftemperatur ohne Beschädigung des Substrates zu ermöglichen.

Ein weiterer Aspekt ist eine Beschichtungsvorrichtung zur Durchführung eines erfindungsgemäßen Verfahrens, wobei die Beschichtungsvorrichtung aus einer Düse besteht, die sich über die gesamte Bearbeitungsbreite erstreckt, bzw. die Sprühvorrichtung eine Düse aufweist, die die gesamte Bearbeitungsbreite durch einen Sprühkegel 3 abdeckt,abdeckt, oder die Beschichtungseinrichtung eine Breitschlitzdüse ist, die die Laminatlage mit einem kontinuierlichen Kleberschicht beschichtet,

Ein weiterer Aspekt ist eine Beschichtungsvorrichtung zur Durchführung eines erfindungsgemäßen Verfahrens, wobei die Sprühvorrichtung der Beschichtungsvorrichtung aus mehreren über die Bearbeitungsbreite nebeneinander angeordneten Sprühdüsen besteht, deren Sprühkegel sich seitlich in einem geringen Mass überlappen.

Ein weiterer Aspekt ist eine Beschichtungsvorrichtung zur Durchführung eines erfindungsgemäßen Verfahrens, wobei die Sprühvorrichtung aus mehreren über die Bearbeitungsbreite neben- und hintereinander angeordneten Sprühdüsen besteht, wobei die einzelnen Sprühdüsenreihen zueinander versetzt sind.

Vorzugsweise umfasst die Beschichtungsvorrichtung in der Nähe des Düsenmundes oder im Düsenmund selbst eine Temperaturmesseinrichtung zur direkten oder indirekten Messung mindestens einer Fluidtemperatur, die Temperatursignale gewinnt, die direkt oder unter Zwischenschaltung einer Auswertung, einer Kennlinie oder einer anders gearteten Rechenvorschrift in einer Auswerte- bzw. Regeleinheit zur Bildung von Steuersignalen in einem geschlossenen Regelkreis herangezogen werden, wobei die Steuersignale zur Ansteuerung mindestens einer der in dieser Anmeldung genannten Heizvorrichtungen dienen,

Ein weiterer Aspekt ist ein Verfahren zur Steuerung von in dieser Anmeldung genannten Heizvorrichtungen zur Durchführung eines erfindungsgemäßen Verfahrens , wobei nach dem erfindungsgemässen Beschichtungsauftrag auf die Laminatlage auf dieser mittels eines berührenden oder nicht berührenden Temperaturmessverfahren die Temperatur des aufgetragenen Kaschierklebers gemessen wird und die Temperaturmesseinrichtung Temperatursignale gewinnt, die direkt oder unter Zwischenschaltung einer Auswertung, einer Kennlinie oder einer anders gearteten Rechenvorschrift in einer Auswerte- bzw. Regeleinheit zur Bildung von Steuersignalen in einem geschlossenen Regelkreis herangezogen werden, wobei die Steuersignale zur Ansteuerung mindestens einer der Heizvorrichtungen dienen.

### Bezugszeichenliste:

| | |
|---|---|
| 1 | Sprüh- / Düsenvorrichtung |
| 2 | Düsenmund / Düsenmündung |
| 3 | Sprühkegel / Sprühstrahl |
| 4 | Laminatlage (Substrat) |
| 5 | Förderrichtung des Substrates |
| 6 | Verdunstung (Wasser und gegebenenfalls weitere Komponenten X) |
| 7 | Absaugluftstrom |
| 8 | Filtervorrichtung |
| 9 | Absaugvorrichtung / Absaugrohr |
| 10 | Wärmestrahler / Warmlufteinspeisung |
| 11 | Wärmestrahlung / Warmluftstrom |
| 12 | Reflektor |
| 13 | Umhausung |

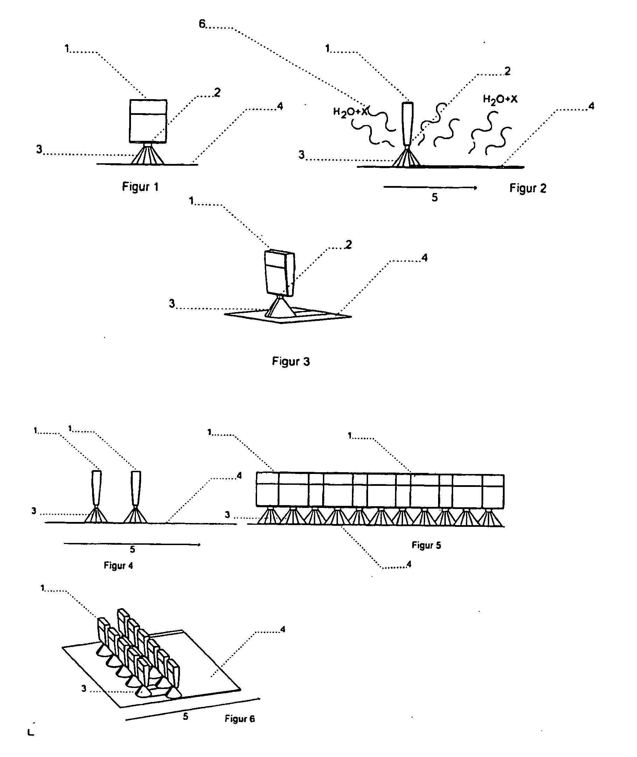

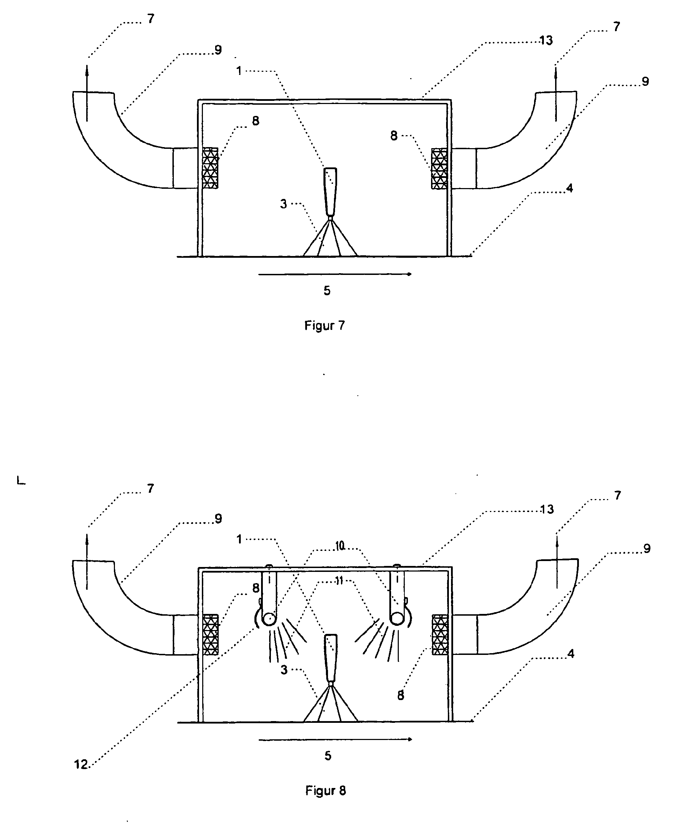

## Patentansprüche

1. Verfahren zum Kaschleren bzw. Laminieren von zwei oder mehreren einzelnen Laminatlagen (4) zu einem Laminatverbund, bei welchem mindestens einer der miteinander zu verbindenden Laminatlagen (4) mit einem lösemittelhaltigen Kaschierkleber versehen wird, wobei das Lösemittel des Kaschierklebers ganz oder hauptsächlich aus Wasser besteht, und anschliessend die Laminaflagen (4) unter Druck miteinander zu einem Laminatverbund verbunden werden, wobei der wässrige Kaschierkleber mit einer Düse (1), zum Beispiel einer Breitschlitzdüse, oder mehreren Düsen (1) auf die Laminatlage (4) bzw. die Laminatlagen aufgetragen wird, wobei dem Kaschierkleber unmittelbar vor und gegebenenfalls während des Beschichtungvorgangs zusätzliche Wärmeenergie zugeführt wird, die ein zu mindestens teilweises verstärktes Verdunsten / Verdampfen (6) des in dem Kaschierklebers befindlichen Wassers während des Beschichtungsvorgangs beim Düsenaustritt und / oder unmittelbar nach dem Beschichtungsvorgang auf die Laminatlage (4) bzw. die Laminatlagen bewirkt, wobei es sich bei der Auftragsdüse (1) bzw. den mehreren Auftragsdüsen (1) für den Kaschierkleber um Zweistoff- oder Mehrstoffdüse handelt, wobei mindestens ein Treibgas durch eine geeignete Heizmethode, z.B. ein Heizregister oder eine Heizpatrone erhitzt wird.

2. Verfahren nach Anspruch 1, **gekennzeichnet dadurch, dass** die Wärmeenergie dem Kaschierkleber durch eine beheizte Sprühvorrichtung / Düsenvorrichtung (1) zugeführt wird.

3. Verfahren nach Anspruch 1 , **gekennzeichnet dadurch, dass** die Wärmeenergie dem Kaschierkleber durch einen beheizten Vorratstank, aus dem der Kaschierkleber vor dem Versprühen entnommen wird und / oder einem Durchlauferhitzer, der in der Kaschierkleberzuführung zu der Sprühvorrichtung / Düsenvorrichtung (1) integriert ist, und / oder durch eine Schlauchheizung, die Bestandteil der Kaschierkleberzuführung zu der Sprirhvorrichtung / Düsenvorrichtung (1) ist, zugeführt wird.

4. Verfahren nach Anspruch 1, **gekennzeichnet dadurch, dass** sich die Sprühdüse / bzw. die Sprühdüsen (1) sich innerhalb einer zu mindestens teilweise geschlossenen Umhausung (13) befindet und die innerhalb der Umhausung (13) befindliche Luft durch geeignete Heizmassnahmen, zum Beispiel Infrarotstrahler (10), Heissluftdüsen (10) oder in anderer Form zugeführte Heissluft, Heizregister etc., erwärmt wird.

5. Verfahren nach Anspruch 1, **gekennzeichnet dadurch, dass** sich die Sprühdüse (1) / bzw. die Sprühdüsen (1) sich innerhalb einer zu mindestens teilweise geschlossenen Umhausung (13) befindet und der Kaschierkleber während des Beschichtungsvorgangs und / oder nach der Applikation durch energiereiche Strahlung, zum Beispiel Mikrowellenstrahlung, erwärmt wird.

6. Verfahren nach Anspruch 1 und den Ansprüchen 2-5, **gekennzeichnet dadurch, dass** die Wärmeenergie durch eine beliebige Kombination der Massnahmen zur Wärmezufuhr aus den Ansprüchen 2-5 erfolgt.

7. Verfahren nach Anspruch 1 und mindestens einem der Ansprüche 2-6, **gekennzeichnet dadurch, dass** der Kaschierkleber und / oder das Treibgas durch die Wärmeenergiezufuhr mindestens eine Temperaturerhöhung von 20K erfährt.

8. Verfahren nach dem Anspruch 1 und gegebenenfalls weiteren Ansprüchen aus 2-6, **gekennzeichnet dadurch, dass** dem Kaschierkleber nach dem Beschichtungsvorgang vor dem eigentlichen Kaschiervorgang zum Verbinden der einzelnen Lagen keine zusätzliche Trocknungsenergie durch beheizte Thermoluft, IR - Strahler, Mikrowellentrockner oder ähnliche Heizaggregate zugeführt wird.

9. Verfahren nach dem Anspruch 1 und gegebenenfalls weiteren Ansprüchen aus 2-6, **gekennzeichnet dadurch, dass** dem Kaschierkleber nach dem Beschichtungsvorgang vor dem eigentlichen Kaschiervorgang zum Verbinden der einzelnen Lagen in einem geringeren Mass zusätzliche Trocknungsenergie durch beheizte Thermoluft, IR - Strahler, Mikrowellentrockner oder ähnliche Heizaggregate zugeführt wird, die nur dazu dient die mit dem Beschichtungsvorgang ausgelösten Trocknungsvorgänge aufrecht zu erhalten.

10. Verfahren nach Anspruch 1 und mindestens einem der Ansprüche 2 und 3, **gekennzeichnet dadurch, dass** der Kaschierkleber spätestens nach der Wärmeenergiezufuhr bis zu dem Austreten aus dem Düsenmund (2) in einem geschlossenen System gefördert und gelagert wird, das einen Luftzutritt nicht oder höchstens in einem sehr geringen Mass zulässt.

11. Verfahren nach Anspruch 1 und gegebenenfalls weiteren Ansprüchen aus 2-8, **gekennzeichnet dadurch, dass** das der Klebstoff über eine Sprühdüse auf die Laminatlage appliziert wird und der eigentliche Sprühvorgang in einem Umhausung (13) stattfindet, durch die die zu besprühende Laminatlage (4) gefördert wird, um ein Vagabundieren der Sprühaerosole in die Umgebung zu vermeiden.

12. Verfahren nach Anspruch 11, **gekennzeichnet dadurch, dass** die Umhausung (13) eine oder mehrere Absaugeinrichtungen (9) aufweist, die die mit Feuchtigkeit und gegebenenfalls durch den Sprühvorgang gebildeten Aerosolen geschwängerte Luft aus der Umhausung (13) absaugt, wobei vor oder in die Absaugkanäle vorteilhafterweise Filteranlagen (8) integriert sind, die zu mindestens die winzige Klebstoffaerosole aus der Absaugluft (7) ausfiltern.

13. Verfahren nach Anspruch 1 und gegebenenfalls weiteren Ansprüchen aus 2-12, **gekennzeichnet dadurch, dass** die mit dem Kaschierkleber zu beschichtende Laminatlage (4) aus einem Rollenmaterial gebildet wird, die in dem Kaschiervorgang unter Druck mit einem Bogen oder mit einem Schuppenstrom aufeinanderfolgender Bogen verbunden wird.

14. Verfahren nach Anspruch 1 und gegebenenfalls weiteren Ansprüchen aus 2-12, **gekennzeichnet dadurch, dass** das die mir dem Kaschierkleber zu beschichtende Laminatlage (4) aus einem Rollenmaterial gebildet wird, das in dem Kaschiervorgang unter Druck mit einer weiteren Laminatlage gebildet aus einem Rollenmaterial verbunden wird.,

## Claims

1. A method for coating respectively laminating two or more individual laminate layers (4) to form a laminated composite, in which at least one of the laminate layers (4) which are to be joined together is provided with a solvent-containing laminating adhesive, the solvent of the laminating adhesive consisting entirely or mainly of water, and then the laminate layers (4) are joined together under pressure to form a laminated composite, the aqueous laminating adhesive being applied to the laminate layer (4) or the laminate layers with a nozzle (1), for example a slot die, or a plurality of nozzles (1), with additional thermal energy being supplied to the laminating adhesive directly before and optionally during the coating operation, which energy brings about an at least partial intensified volatilisation/evaporation (6) of the water in the laminating adhesive during the coating operation upon emerging from the nozzle and/or directly after the coating operation onto the laminate layer (4) or the laminate layers, the application nozzle (1) or the plurality of application nozzles (1) for the laminating adhesive being dual-component or multi-component nozzles, with at least one blowing gas being heated by a suitable heating method, e.g. a heating register or a cartridge heater.

2. A method according to Claim 1, **characterised in that** the thermal energy is supplied to the laminating adhesive through a heated spraying device/nozzle device (1).

3. A method according to Claim 1, **characterised in that** the thermal energy is supplied to the laminating adhesive through a heated storage tank, from which the laminating adhesive is removed before spraying, and/or a continuous heater which is integrated in the laminating-adhesive supply to the spraying device/nozzle device (1), and/or through a tube heating means which is a constituent of the laminating-adhesive supply to the spraying device/nozzle device (1).

4. A method according to Claim 1, **characterised in that** the spray nozzle or the spray nozzles (1) is/are located inside an enclosure (13) which is closed at least in part and the air inside the enclosure (13) is heated by suitable heating measures, for example infrared radiators (10), hot-air nozzles (10) or hot air supplied in a different form, heating registers etc.

5. A method according to Claim 1, **characterised in that** the spray nozzle (1) or the spray nozzles (1) is/are located inside an enclosure (13) which is closed at least in part and the laminating adhesive is heated during the coating operation and/or after the application by energy-rich radiation, for example microwave radiation.

6. A method according to Claim 1 and Claims 2-5, **characterised in that** the thermal energy takes place by any combination whatsoever of the measures for supplying heat from Claims 2-5.

7. A method according to Claim 1 and at least one of Claims 2-6, **characterised in that** the laminating adhesive and/or the blowing gas undergoes at least one temperature increase of 20K owing to the supply of thermal energy.

8. A method according to Claim 1 and optionally further Claims from 2-6, **characterised in that** the laminating adhesive, after the coating operation before the laminating operation proper to join the individual layers, is not supplied with any additional drying energy by heated thermal air, IR radiators, microwave dryers or similar heating equipment.

9. A method according to Claim 1 and optionally further Claims from 2-6, **characterised in that** the laminating adhesive, after the coating operation before the laminating operation proper to join the individual layers, is supplied to a lesser extent with additional drying energy by heated thermal air, IR radiators, microwave dryers or similar heating equipment, which energy only serves to maintain the drying operations triggered with the coating operation.

10. A method according to Claim 1 and at least one of Claims 2 and 3, **characterised in that** the laminating adhesive at the latest after the supply of thermal energy until the emergence from the nozzle mouth (2) is conveyed and stored in a closed system which does not permit the ingress of air or permits it at most to a very slight extent.

11. A method according to Claim 1 and optionally further Claims from 2-8, **characterised in that** the adhesive is applied to the laminate layer via a spray nozzle and the spraying operation proper takes place in an enclosure (13) through which the laminate layer (4) which is to be sprayed is conveyed, in order to avoid the spray aerosols straying into the surroundings.

12. A method according to Claim 11, **characterised in that** the enclosure (13) has one or more extraction means (9) which extract(s) the air which is heavy with moisture and optionally aerosols formed by the spraying operation from the enclosure (13), with filter systems (8) advantageously being integrated before or in the extraction ducts, which systems at least filter out the tiny adhesive aerosols from the extraction air (7).

13. A method according to Claim 1 and optionally further Claims from 2-12, **characterised in that** the laminate layer (4) which is to be coated with the laminating adhesive is formed from a roll material which is joined under pressure with a sheet or with a shingled stream of successive sheets in the laminating operation.

14. A method according to Claim 1 and optionally further Claims from 2-12, **characterised in that** the laminate layer (4) to be coated with the laminating adhesive is formed from a roll material which is joined under pressure with a further laminate layer formed from a roll material in the laminating operation.

## Revendications

1. Procédé de contre-collage ou laminage de deux ou plusieurs couches de laminés individuelles (4) pour obtenir un assemblage de laminés, dans lequel au moins l'une des couches de laminés (4) à assembler l'une à l'autre est pourvue d'une colle de contre-collage à teneur en solvant, le solvant de la colle de contre-collage étant composé entièrement ou principalement d'eau, et les couches de laminés (4) étant ensuite assemblées l'une à l'autre sous pression, pour obtenir un assemblage de laminés, dans lequel la colle de contre-collage aqueuse est appliquée à l'aide d'une tuyère (1), par exemple une tuyère à fente large, ou de plusieurs tuyères (1) sur la couche de laminé (4) ou les couches de laminés, vers la colle de contre-collage étant alimentée, immédiatement avant et éventuellement pendant l'opération de revêtement, une énergie thermique additionnelle qui provoque une évaporation (6) au moins partiellement amplifiée de l'eau se trouvant dans la colle de contre-collage pendant l'opération de revêtement à la sortie de tuyère et/ou immédiatement après l'opération de revêtement sur la couche de laminé (4) ou les couches de laminés, où il s'agit, pour la tuyère d'application (1) ou les plusieurs tuyères d'application (1) de la colle de contre-collage, d'une tuyère en deux matériaux ou en plusieurs matériaux, un gaz propulseur étant chauffé par une méthode de chauffage appropriée, par exemple un registre chauffant ou une cartouche chauffante.

2. Procédé selon la revendication 1, **caractérisé par le fait que** l'énergie thermique est alimentée vers la colle de contre-collage par un dispositif de pulvérisation / dispositif de tuyère (1) chauffé.

3. Procédé selon la revendication 1, **caractérisé par le fait que** l'énergie thermique est alimentée vers la colle de contre-collage par un réservoir chauffé duquel est prélevée la colle de contre-collage avant la pulvérisation et/ou un dispositif de chauffage de passage qui est intégré dans l'alimentation de colle de contre-collage vers le dispositif de pulvérisation / dispositif de tuyère (1), et/ou par un dispositif de chauffage en forme de flexible qui fait partie de l'alimentation de colle de contre-collage vers le dispositif de pulvérisation / dispositif de tuyère (1).

4. Procédé selon la revendication 1, **caractérisé par le fait que** la tuyère de pulvérisation / ou les tuyères de pulvérisation (1) se trouvent dans une enceinte (13) au moins partiellement fermée et que l'air se trouvant à l'intérieur de l'enceinte (13) est chauffé par des mesures de chauffage appropriées, par exemple un dispositif de rayonnement infrarouge (10), des tuyères à air chaud (10) ou de l'air chaud alimenté sous une autre forme, un registre chauffant, etc.

5. Procédé selon la revendication 1, **caractérisé par le fait que** la tuyère de pulvérisation (1) / ou les tuyères de pulvérisation (1) se trouvent à l'intérieur d'une enceinte au moins partiellement fermée (13) et que la colle de contre-collage est chauffée pendant l'opération de revêtement et/ou après l'application par rayonnement riche en énergie, par exemple rayonnement par micro-ondes.

6. Procédé selon la revendication 1 et les revendications 2 à 5, **caractérisé par le fait que** l'énergie thermique a lieu par une combinaison quelconque des mesures d'alimentation de chaleur des revendications 2 à 5.

7. Procédé selon la revendication 1 et au moins l'une des revendications 2 à 6, **caractérisé par le fait que** la colle de contre-collage et/ou le gaz propulseur subit par l'alimentation d'énergie thermique au moins une élévation de température de 20K.

8. Procédé selon la revendication 1 et éventuellement d'autres des revendications 2 à 6, **caractérisé par le fait qu'**après l'opération de revêtement, avant l'opération de contre-collage proprement dite pour l'assemblage des différentes couches, il n'est pas alimenté d'énergie de séchage additionnelle vers la colle de contre-collage par de l'air thermique chauffé, un dispositif de rayonnement IR, un dispositif de séchage à micro-ondes ou des ensembles de chauffage similaires.

9. Procédé selon la revendication 1 et éventuellement d'autres des revendications 2 à 6, **caractérisé par le fait qu'**après l'opération de revêtement, avant l'opération de contre-collage proprement dite pour l'assemblage des différentes couches, il est alimenté vers la colle de contre-collage, dans une plus petite mesure, de l'énergie de séchage additionnelle par de l'air thermique chauffé, un dispositif de rayonnement IR, un dispositif de séchage à micro-ondes ou des ensembles de chauffage similaires, laquelle ne sert qu'à maintenir les opérations de séchage déclenchées par l'opération de revêtement.

10. Procédé selon la revendication 1 et au moins l'une des revendications 2 et 3, **caractérisé par le fait que** la colle de contre-collage est transportée et entreposée au plus tard après l'alimentation d'énergie thermique jusqu'à la sortie de l'embouchure de tuyère (2) dans un système fermé qui ne permet pas, ou tout au plus que dans une très faible mesure, d'accès d'air.

11. Procédé selon la revendication 1 et éventuellement d'autres des revendications 2 à 8, **caractérisé par le fait que** la colle est appliquée par l'intermédiaire d'une tuyère de pulvérisation sur la couche de laminé et que l'opération de pulvérisation proprement dite a lieu dans une enceinte (13) à travers laquelle est transportée la couche de laminé à pulvériser (4), pour éviter un vagabondage des aérosols de pulvérisation dans l'environnement.

12. Procédé selon la revendication 11, **caractérisé par le fait que** l'enceinte (13) présente un ou plusieurs dispositifs d'aspiration (9) qui aspirent l'air chargée d'humidité et éventuellement d'aérosols formés par l'opération de pulvérisation de l'enceinte (13), avant ou dans les canaux d'aspiration étant avantageusement intégrées des installations de filtre (8) qui éliminent par filtration de l'air d'aspiration (7) au moins les aérosols de colle minuscules.

13. Procédé selon la revendication 1 et éventuellement d'autres des revendications 2 à 12, **caractérisé par le fait que** la couche de laminé (4) à revêtir de la colle de contre-collage est réalisée en un matériau en rouleau qui, lors de l'opération de contre-collage, est assemblée sous pression avec une feuille ou avec un courant en écailles de feuilles successives.

14. Procédé selon la revendication 1 et éventuellement d'autres des revendications 2 à 12, **caractérisé par le fait que** la couche de laminé à revêtir de la colle de contre-collage (4) est formée en un matériau en rouleau qui est assemblé, lors de l'opération de contre-collage, sous pression avec une autre couche de laminé en un matériau en rouleau.
